# EUROPÄISCHE PATENTSCHRIFT

(11) **EP 0 930 475 B1**
(45) Veröffentlichungstag und Bekanntmachung des Hinweises auf die Patenterteilung: **23.04.2003**
(21) Anmeldenummer: 98122405.8
(22) Anmeldetag: 26.11.1998
(51) Int. Cl.: F25D 23/06

(54) **Sorptionsmittel für Vakuumisolationseinheiten**
Sorbent for vacuum insulation units
Sorbant pour unités d'isolation sous vide

(30) Priorität: 16.01.1998 DE 19801324
(43) Veröffentlichungstag der Anmeldung: 21.07.1999
(73) Patentinhaber: BASF AKTIENGESELLSCHAFT, 67056 Ludwigshafen (DE)
(72) Erfinder: Heinz, Marion, 02994 Bernsdorf (DE); Horn, Peter Dr., 69118 Heidelberg (DE); Biedermann, Anja Dr., 01968 Senftenberg (DE)

(56) Entgegenhaltungen:
- EP-A- 0 715 138
- EP-A- 0 768 117
- US-A- 5 300 138
- US-A- 5 532 034
- DATABASE WPI Section Ch, Week 8626 Derwent Publications Ltd., London, GB; Class A32, AN 86-164666 XP002102272 & JP 61 096287 A (MATSUSHITA REIKI KK) , 14. Mai 1986

## Beschreibung

Die Erfindung betrifft eine Vakuumisolationseinheit, enthaltend als Sorptionsmittel mikroporöse Aktivkohle mit einer Isotherme vom Typ I und einem mittleren Porendurchmesser im Bereich von 0,4 bis 4 nm und mindestens eine Wasserdampf absorbierende Substanz.

Vakuumisolationseinheiten finden unter anderem Anwendung für Kühlgerätegehäuse, Behälter für Kühlfahrzeuge oder Fernwärmerohre. Aufgrund einer geringeren Wärmeleitfähigkeit bieten sie Vorteile gegenüber üblichen Dämmstoffen. Das Energieeinsparpotential gegenüber geschlossenzelligen Polyurethanhartschaumstoffen liegt etwa bei 20-30%.

Solche Vakuumisolationseinheiten bestehen in der Regel aus einem wärmeisolierenden Kernmaterial, das in eine gasdichte Folie verpackt, evakuiert und luftdicht eingeschweißt wird.

Für die Langzeitstabilität ist der Druckanstieg im Inneren der Vakuumisolationseinheiten entscheidend. Hierdurch wird die Isolierwirkung verschlechtert. Zum einen diffundieren mit der Zeit Bestandteile der Umgebungsluft durch die Folie in das Innere der Vakuumisolationeinheiten, zum anderen können Substanzen aus dem verwendeten Kernmaterial ausgasen. Beispielsweise können bei der Verwendung von offenzelligen Polyurethanhartschaumkernen Bestandteile von Treibmitteln, Aktivatoren oder Zellregualatoren ausgasen.

Aus diesem Grunde werden in die Vakuumisolationseinheiten Sorptionsmittel gegeben. Die Wirkung dieser Sorptionsmittel, auch als Gettermaterialien bezeichnet, beruht auf der Entfernung der Gase aus Luft, Feuchtigkeit und ausgasenden Bestandteilen durch Adsorption oder Absorption. Die Mechanismen sind nicht immer eindeutig bestimmt und können auf chemischer oder physikalischer Bindung an das Soptionsmaterial beruhen. Die Wirksamkeit der Gasaufnahme ist neben der spezifischen Oberfläche und der Zusammensetzung des Sorptionsmaterials auch von den Gasbestandteilen abhängig. Diese Zusammenhänge sind beispielsweise in Wutz, Adam, Walcher, Handbuch Vakuumtechnik, Theorie und Praxis, Verlag Vieweg&Sohn Verlagsgesellschaft mbH, Braunschweig/Wiesbaden 1997, 6. Auflage beschrieben.

Als Sorptionsmaterialen für Vakuumisolationseinheiten sind aus der GB-A 2 286 234 und dort zitierter Literatur beispielsweise Calciumsulfatgranulat zur Adsorption von Wasserdampf, Metalle zur Sauerstoff- und Stickstoffabsorption, Aktivkohle zur Entfernung organischer Gase und Zeolithe zur Absorption von Kohlendioxid und Stickstoff bekannt.

Als Trockenmittel werden im Organikum, Autorenkollektiv, Deutscher Verlag der Wissenschaften, Berlin 1963 unter anderem Phosphorpentoxid, Calciumoxid, Bariumoxid, Natriumhydoxid, Kaliumhydroxid, Kaliumcarbonat, Natrium, Calciumchlorid, Natriumsulfat oder Magnesiumsulfat empfohlen.

Aufgrund der unterschiedlichen Natur der zu adsorbierenden Gase reicht häufig ein Sorptionsmittel nicht aus. Vielfach wird eine Kombination von mehreren Sorptionsmitteln vorgeschlagen.

US-A 4 444 821 lehrt die Verwendung eines Zeolithen und metallisches Barium als Sorptionsmittel in glasfasergefüllten Vakuumisolationspannels. Die Verwendung von elementaren Metallen wie Barium kann aber wegen der hohen Reaktivität gegenüber Feuchtigkeit zu Problemen bei der Rezyklierung führen.

Die EP-A 0 737 833 lehrt die Verwendung einer Kombination aus Absorptionsmitteln für Sauerstoff, Feuchtigkeit und saure Gase. Als Adsorptionsmittel für Sauerstoff sind Metalle oder Metallsalze mit einem Adsorptionsbeschleuniger wie Übergangsmetallsalzen von ungesättigten Fettsäuren genannt. Als Adsorptionsmittel für Feuchtigkeit sind unter anderem Kieselgel, Aktivkohle oder Zeolithe genannt.

Die US 4 000 246 lehrt die Verwendung einer Aktivkohle mit einer Teilchengröße von 0,1 bis 100 µm und einer Oberfläche von 50 bis 2000 m²/g (bestimmt durch N²-Absorption) in Kombination mit einem Metallalkoholat. Zur Herstellung des Vakuums wird ein gegenüber dem Metallalkoholat reaktives Gas wie Kohlendioxid eingeleitet und das entstehende Reaktionsprodukt und der Aktivkohle adsorbiert.

Eine Vakuumisolationseinheit mit Aktivkohle und einem vorbehandelten Zeolithen als Sorptionsmittel wird in EP-A 0 181 778 beschrieben.

Schaumstoffe werden wegen des geringen Gewichtes gerne als Kernmaterial für Vakuumisolationseinheiten eingesetzt. Aufgrund der . oben genannten Ausgasproblematik wird hierfür eine besondere Sorptionswirkung benötigt. Die genannten Sorptionsmittel bzw. Sorptionsmittelkombinationen erfüllen diese Anforderung nicht immer zufriedenstellend.

Die Aufgabe der vorliegenden Erfindung bestand darin, wirksame Sorptionsmittel für Vakuumisolationseinheiten bereitzustellen, die insbesondere bei Verwendung von Schaumstoffkernen eine hohe Langzeitstäbilität der Isolierwirkung der Vakuumeinheit besitzen.

Hierzu wurde eine Vakuumisolationseinheit, enthaltend als Sorptionsmittel a) mikroporöse Aktivkohle mit einer Isotherme vom Typ I und einem mittleren Porendurchmesser im Bereich von 0,4 bis 4,1 nm und b) mindestens eine Wasserdampf absorbierende Substanz, gefunden.

Die mikroporöse Aktivkohle und die Wasserdampf absorbierende Substanz können separat oder als Mischung in die Vakuumisolationseinheit vor dem Evakuieren eingebracht werden. Die Sorptionsmittel können beispielsweise auch in gasdurchlässige Beutel aus Papier oder Stoffgewebe verpackt werden.

Das Sorptionsmittel wird in der Regel im Konzentrationsbereich von 0,01 g bis 50 g, bevorzugt 0,05 g bis 30 g pro Liter des Volumens der gesamten Vakuumisolationseinheit eingesetzt. In der Regel entspricht das eingeschlossene Volumen dem Volumen des Kernmaterials.

Der Anteil der mikroporösen Aktivkohle beträgt mindestens 5 Gew.-%, bevorzugt mindestens 10 Gew.-% bezogen auf das gesammte Sorptionsmittel.

Wesentliche Merkmale der vorliegenden Erfindung ist die Verwendung von mikroporöser Aktivkohle, auch als mikroporöses Kohlenstoffmolekularsieb bezeichnet, wobei diese Materialien zweckmäßigerweise zu mindestens 86 Gew.-%, vorzugsweise zu mehr als 95 Gew.-%, bezogen auf das Gesamtgewicht, aus Kohlenstoff bestehen.

Die erfindungsgemäßen verwendbaren mikroporösen Aktivkohlen oder mikroporösen Kohlenstoffmolekularsiebe besitzen einen mittleren Porendurchmesser von 0,4 bis 4,1 nm, vorzugsweise von 0,7 bis 2 nm und insbesondere von 1 bis 1,6 nm. Die Häufigkeit der mittleren Porendurchmesser in den angegebenen Bereichen beträgt mehr als 40 %, vorzugsweise mehr als 50 % und insbesondere mehr als 60 %.

Das Porenvolumen der erfindungsgemäß geeigneten mikroporösen Aktivkohlen oder mikroporösen Kohlenstoffmolekularsiebe liegt vorteilhafterweise im Bereich von 0,4 bis 1,4 ml/g, vorzugsweise von 0,3 bis 0,9 ml/g und insbesondere von 0,5 bis 0,8 ml/g. Die Porosität dieser mikroporösen Aktivkohlen oder mikroporösen Kohlenstoffmulekularsiebe und damit die Bestimmung des Porenvolumens kann erfaßt werden durch eine Titration, mit beispielsweise Wasser, nach einem Verfahren, wie es von A.Y. Mottlau und N.E. Fischer in Anal. Chem. Vol 34 (6), Seiten 714-715 (1962) beschrieben wird.

Bestimmt man das Porenvolumen der mikroporösen Aktivkohlen oder mikroporösen Kohlenstoffmolekularsiebe aus dem abszissenparallelen Verlauf einer mit Stickstoff bei 77 K daran gemessenen Gas-Sorptionsisotherme, so berechnen sich nach dem BJH-Modell (E.P. Barett, L.G. Joyner, P.P. Halenda, J. Amer. Chem. Soc., Vol. 73, 373-380 (1951)) die mittleren Porendurchmesser.

Die erfindungsgemäß verwendbaren mikroporösen Aktivkohlen oder mikroporösen Kohlenstoffmolekularsiebe ergeben bei der Bestimmung der äquivalenten spezifischen Oberfläche nach der Berechnung mittels der BET Methode (s. Brunauer, P.H. Emmett, E. Teller in J. Amer. Chem. Soc. Vol. 60, Seiten 309 bis 319 (1938) Werte von vorteilhafterweise 500 bis 2500 m²/g und größer, vorzugsweise von 800 bis 1700 m²/g und insbesondere von 1000 bis 1500 m²/g. Ein weiteres Charakteristikum der erfindungsgemäß verwendbaren mikroporösen Aktivkohlen oder mikroporösen Kohlenstoffmolekularsiebe kann der Verlauf der Adsorptionsisothermen sein. In den nach dem Stand der Technik ausgeführten Gasadsorptionsmessungen mit Stickstoff bei einer Temperatur von 77 K können die erfindungsgemäß verwendbaren Aktivkohlen oder Kohlenstoffmolekularsiebe eine Isotherme aufweisen, deren Verlauf als Typ I bekannt ist (K.S.W. Sind, D.M. Everett, R.A.W. Haul, L. Moscou, R.A. Pierotti, J. Rouquerol und T. Siemieniewska in Pure and Appl. Chem. Vol. 57 (4) Seiten 603 bis 619 (1985). Bei der reversiblen Typ I-Isothermen tritt keine Hystereseschleife auf.

Die erfindungsgemäß verwendbaren mikroporösen Aktivkohlen und mikroporösen Kohlenstoffmulekularsiebe sind bekannt und im Handel erhältlich. Verfahren zu ihrer Herstellung und ihre Eigenschaften werden z.B. beschrieben in Ullmanns Encyklopädie der technischen Chemie, Band 14, 4. neubearbeitete und erweiterte Auflage, Verlag Chemie, Weinheim, New York, 1977, Seiten 620 ff, Ullmanns Encyclopedia of Industrial Chemistry, Vol. 5A, Seiten 124 ff, 5. Edition, Verlag Chemie (1986), Kirk-Othmer, Encyclopedia of Chemical Technology, Vol. 4, Seiten 561 ff, 3. Edition, Verlag J. Wiley and Sons (1978), von G.C. Grunewald und R.S. Drago in J.Am. Chem. Soc. 1991, Vol. 113, Seiten 1636-1639, der EP-B-0 102 902 und EP-B-0 119 924.

Die erfindungsgemäß verwendbaren mikroporösen Aktivkohlen und mikroporösen Kohlenstoffmolekularsiebe können einzeln oder in Form einer Mischung aus mindestens zwei Aktivkohlen, Kohlenstoffmolekularsieben oder Aktivkohlen und Kohlenstoffmolekularsieben mit unterschiedlichen Spezifikationen verwendet werden. Je nach den gewünschten Eigenschaften kann es sich als zweckmäßig erweisen, Mischungen aus Aktivkohlen und/oder Kohlenstoffmolekularsieben zu verwenden, die sich beispielsweise durch das Porenvolumen, den Porendurchmesser und/oder verschieden große Wassergehalte unterscheiden.

Die mikroporösen Aktivkohlen und/oder mikroporösen Kohlenstoffmolekularsiebe können in den handelsüblichen Korngrößen eingesetzt werden. Zur Erzielung einer verbesserten Lagerstabilität und leichteren Handhabung der mikroporösen Aktivkohlen und/oder mikroporösen Kohlenstoffmolekularsiebe enthaltenden Systemkomponente werden zweckmäßigerweise mikroporöse Aktivkohlen und/oder mikroporösen Kohlenstoffmolekularsiebe mit einer Korngröße von 0,5 bis 200 mm, vorzugsweise von 3 bis 40 mm und insbesondere von 5 bis 10 mm verwendet.

Der Wassergehalt der mikroporösen Aktivkohle liegt in der Regel im Bereich von 0,1 bis 20 Gew.%, bevorzugt im Bereich von 0,1 bis 10 Gew.-%.

Als Wasserdampf absorbierende Substanzen können alle gängigen Trocknungsmittel eingesetzt werden. Bevorzugt werden Alkali- und Erdalkali- oxide, hydroxide, -carbonate und -sulfate sowie Molekularsiebe oder Zeolithen, sowie Kieselgele verwendet. Besonders bevorzugt werden Natrium-A-Zeolithe, Calciumoxid und Bariumoxid.

Die mikroporösen Aktivkohlen und/oder mikroporösen Kohlenstoffmolkularsiebe werden bevorzugt in Verbindung mit kristallinen, mikroporösen Molekularsieben und/oder amorphen, mikroporösen Kieselgelen verwendet.

Hierfür bewährt haben sich insbesonders kristalline, mikroporöse Molekularsiebe mit einem Durchmesser der Hohlräume von kleiner als 1,3 nm aus Metalloxiden oder Metallphosphaten, die zweckmäßigerweise ausgewählt sind aus der Gruppe der Aluminium-, Bor-, Eisen-, Chrom-, Vanadium-, Beryllium-, Antimon-, Arsen-, Gallium-, Silicium-, Germanium-, Titan-, Zirkon- und Hafniumoxide oder -phosphate, so daß derartige Molekularsiebe vorzugsweise eingesetzt werden. Hierfür geeignete Molekularsiebe können ferner Mischoxide sein, die im wesentlichen bestehen aus Aluminium-Siliciumoxid, Bor-Siliciumoxid, Eisen(III)-Siliciumoxid, Gallium-Siliciumoxid, Chrom(III)-Siliciumoxid, Beryllium-Siliciumoxid, Vanadium-Siliciumoxid, Antimon(V)-Siliciumoxid, Arsen(III)-Siliciumoxid, Titan(IV)-Siliciumoxid, Aluminium-Germaniumoxid, Bor-Germaniumoxid, Aluminium-Zirkonoxid und Aluminium-Hafniumoxid oder ausschließlich aus Silciumdioxid (Silicalite). Als Metalloxide eignen sich ferner Zeolithe mit einem Durchmesser der Hohlräume von 0,74 bis 0,41 nm, die vorzugsweise SiO₂/Al₂O₃-Verhältnis gleich oder größer als 6 aufweisen. Die Zeolithe können beispielsweise eine Pentasil-, Faujasit-, Mordenit-, Erionit-, Chabasit-, Zeolith-A- oder Offretitstruktur aufweisen. Als kristalline mikroporöse Molekularsiebe werden vorzugsweise Mordenit in der H-Form, Na-Form oder Ammoniumform, Offretit in der H-Form, K-Form, Na-Form oder Ammoniumform, Zeolith ZSM-5 in der H-Form, Na-Form oder Ammonium-Form, Zeolith ZSM-11, Zeolith ZSM-12- Beta-Zeolith, Clinoptilolith, Ferrierit, ultrastabiler Y-Zeolith, ultrastabiler Mordenit oder Silicalite oder insbesondere Mordenit in der H- oder Na-Form oder Silicalite oder Mischungen dieser Molekularsiebe in Kombination mit den mikroporösen Aktivkohlen und/oder Kohlenstoffmolekularsieben verwendet.

Als amorphe, mikroporöse Kieselgele haben sich vorzüglich bewährt und finden daher vorzugsweise solche Verwendung, die einen mittleren Porendurchmesser besitzen, der zu mehr als 40 % im Bereich von 0,3 bis 10 nm liegt, ein Porenvolumen im Bereich von 0,15 bis 1,8 ml/g aufweisen und eine BET-Oberfläche im Bereich von 200 bis 900 m²/g haben. Die amorphen, mikroporöse Kieselgele besitzen vorteilhafterweise eine chemische Zusammensetzung, die mindestens 80 Gew.-%, bezogen auf das Gesamtgewicht, Siliciumdioxid enthält. Neben Siliciumdioxid kann die chemische Zusammensetzung der amorphen, mikroporösen Kieselgele zusätzlich Oxide, z.B. Oxide des Aluminiums, Titans, Zirkons, Magnesiums, Niobs, Eisens oder Zinks oder mindestens zwei dieser Metalloxide enthalten.

Mischungen aus mikroporöser Aktivkohle und/oder Kohlenstoffmolekularsieben und kristallinen, mikroporösen Molekularsieben und/oder amorphen, mikroporösen Kieselgelen enthalten zweckmäßigerweise 1 bis 40 Gew.-%, vorzugsweise 3 bis 12 Gew.-% mindestens eines dieser Molekularsiebe mit einem Durchmesser der Hohlräume von kleiner als 1,3 nm aus Metalloxiden oder Metallphosphaten, und/oder mindestens eines dieser amorphen, mikroporösen Kieselgele, bezogen auf das Gewicht der mikroporösen Aktivkohle und/oder mikroporösen Kohlenstoffmolekularsiebe.

Die Vakuumisolationseinheiten können verschiedene Formen annehmen, beispielsweise als starre Panels in flexiblen Kunststofftaschen. Ihre Herstellung und die verwendbaren Materialien sind an sich bekannt. In der Regel wird ein wärmeisolierendes Kernmaterial zusammen mit dem Sorptionsmittel in ein Hüllmaterial mit niedriger Gaspermeabilität unter Vakuum luftdicht eingeschweißt. In der Regel beträgt das Vakuum in der Vakuumisolationseinheit unter 5 mbar, bevorzugt unter 0,1 mbar.

Als Hüllmaterial für die Vakuumisolationseinheit verwendet man im allgemeinen eine Folie. Bevorzugte Folien sind Verbundfolien, insbesondere Mehrschichtverbundfolien mit einer aufgedampften oder auflaminierten Metallschicht, beispielsweise aus Aluminium. Geeignete Folien bestehen z. B. aus Polyester, Polyvinylchlorid, Polyolefinen wie Polyethylen oder Polypropylen, oder Polyvinylalkohol. Als Hüllmaterial kommen auch Inliner von Kühlschränken, Rohrummantelungen oder Metallschichten in Betracht.

Als Kernmaterialen für die Vakuumisolationseinheit können verschiedene Kunststoffe oder Glas in Form von Pulvern, Granulaten, Fasern oder Schäumen eingesetzt werden. Als Kunststoffe eigenen sich beispielsweise Polyurethane, Polystyrole, Polyolefine, Polyacrylate, Phenolharze oder Polyvinylchlorid. Bevorzugt werden offenzellige Schaumstoffe aus den genannten Kunststoffen, wie offenzellige Polystyrolschäume oder offenzellige Polyurethanschäume, insbesondere offenzellige Polyurethanhartschaumstoffe als Kernmaterial verwendet.

Die offenzelligen Polyurethanhartschaumstoffe weisen bevorzugt eine Offenzelligkeit von 50 bis 100% auf. Ihre Dichte beträgt vorzugsweise 30 bis 100 kg/m3, insbesondere 50 bis 65 kg/m3. Im allgemeinen werden sie durch Umsetzung von geeigneten mehrfunktionellen Isocyanaten und gegenüber Isocyanaten reaktive Wasserstoffatome aufweisende Verbindungen in Gegenwart von Zellöffnern erhalten. Beispiele für solche Zellöffner sind Tegostab B8919, Ortegol 501 der Fa. Goldschmidt oder UAX 6164 der Fa. OSI.

Die erfindungsgemäßen Vakuumisolationseinheiten zeigen einen geringen Anstieg der Wärmeleitfähigkeit und besitzen daher ein hohe Langzeitstabilität. Sie eignen sich insbesondere für Gehäuse und Behälterwände für alle Wärmeisolieranwendungen wie Kühlgerätegehäuse, Wände von Kühlhäusern, Kühlbehälter, Fahrzeugaufbauten und Fernwärmerohre.

### Beispiele:

Für die Beispiele wurden Vakuumisolationseinheiten mit den Maßen 20 cm x 20 cm x 2 cm gefertigt. Hierzu wurde das Kernmaterial und der Getter in eine metallisierte TEP-Mehrschichtfolie eingelegt, evakuiert und luftdicht versiegelt.

Als Kernmaterial wurde ein offenzelliger Polyurethanschaum bzw. eine Kunststoffschüttung verwendet.

Der offenzellige Polyurethan wurde wie folgt hergestellt:

| | |
|---|---|
| 10 Gew.-Teile | Polyetherpolyol mit einer Hydroxylzahl von 470 mg KOH/g, einem Molekulargewicht von 470 und einer Funktionalität von 3,9, hergestellt durch Umsetzung von Ethylendiamin mit Propylenoxid. |
| | |
| 10 Gew.-Teile | Polyetherpolyol mit einer Hydroxylzahl von 490 mg KOH/g, einem Molekulargewicht von 490 und einer Funktionalität von 4,3, hergestellt durch Umsetzung einer Mischung von Saccarose, Glycerol und Wasser mit Propylenoxid. |
| | |
| 43 Gew.-Teile | Polyetherpolyol mit einer Hydroxylzahl von 555 mg KOH/g, einem Molekulargewicht von 1800 und einer Funktionalität von 3,0, hergestellt durch Umsetzung von Trimethylolpropan mit Propylenoxid. |
| | |
| 14 Gew.-Teile | Polyesterol aus Glycerol und Tallölfettsäure mit einer Hydroxylzahl von 310 mg KOH/g. |
| | |
| 180 Gew.-Teile | eines Gemisches aus Diphenylmethandiisocyanaten und Polyphenylenpolymethylenpolyisocyanaten mit einem NCO-Gehalt von 31,5 Gew.-% (Lupranat M 20 A). |
| | |
| 4,5 Gew.-Teile | Zellöffner (Tegostab B8919: Firma Goldschmidt) |
| | |
| 1,4 Gew.-Teile | Schaumstabilisator (Tegostab B8863Z: Firma Goldschmidt) |
| | |
| 2,8 Gew.-Teile | Katalysator (Dabco AN 20: Firma Air Products) |

Die angegebenen Komponenten wurden mittels Hochdruck-Mischkopf einer Hochdruck-Schäummaschine PUROMAT® SV 20 der Firma Elastogran vermischt und nach Einbringen in eine offene Form von 400 x 700 x 90 mm frei aufschäumen gelassen.

Aus den Schaumstoffblöcken wurden Prüfkörper mit den Abmaßen 190/190/20 mm ausgesägt, in eine gasdichte Folie verpackt und diese nach dem Evakuieren bis zu Enddrucken von 0,05 mbar verschweißt.

Die Offenzelligkeit des erhaltenen Polyurethanschaumstoffes betrug 96% (Bestimmung gemäß ASTM D 2856-87, Verfahren B). Die Dichte betrug 55 g/l.

Die Kunststoffschüttung wurde aus Mahlgut aus Polyurethanhalbhart- und Polyurethanhartschaum unter Verwendung von Isocyanat (PDMI) zu einer Platte verpreßt.

Die eingesetzte erfindungsgemäße mikroporöse Aktivkohle ( Aktivkohle D 45/2 der Fa. Carbo Tech) hatte folgende Charakteristik:

| | |
|---|---|
| BET-Oberfläche (N²-Adsorption nach DIN 66 131) Isothermentyp I (BDDT-Klassifizierung nach IUPAC (Pure and Appl. Chem. Bd 57(4), (1985) Seite 612) | 1033 m²/g |
| Langmuir-Oberfläche (Langmuir, Journal of the American Chemical Socienty, Bd 38 (1916), Seite 2267 und Bd 40 (1918) Seite 1361) | 1427 m²/g |
| BET-Analyse: C-Wert | -159 |
| BJH-Mesoporenanalyse (N²-Desorption) Mesoporenfläche | 172 m²/g |
| Mesoporenvolumen | 0,12 cm³/g |
| mittlerer Porendurchmesser (4V/C) | 2,8 nm |
| Mikroporenanalyse (aus dem t-Plot) Mikroporenfläche | 1028 m²/g |
| Mikroporenvolumen | 0,477 cm³/g |

| | |
|---|---|
| Mikroporenanalyse nach Horvat-Kawazoe (Journal of Chem. Eng. Japan Bd 16(6) (1983), Seite 470), Ar-Adsorption (Porendurchmesser 0,4 bis 4,1 nm) | |
| Gesamtporenvolumen | 0,442 cm³/g |
| mittlerer Porendurchmesser | 0,76 nm |
| Wassergehalt: | 8 Gew.-% |
| Schüttdichte Korngröße | 0,49 kg/l |

Die in den Vergleichsversuchen V 2 und V 4 verwendete Aktivkohle (nicht erfindungsgemäß) besaß einen mittleren Porendurchmesser von 8 nm. Der Anteil mit einer Porengröße im Bereich von 0,3 bis 3 nm betrug unter 5%.

Als Zeolith wurde ein Na-A-Zeolith (Wessalith ® MS 330 der Firma Degussa) verwendet.

Die Wirkung des Sorptionsmaterials (Getter) wurde über den Anstieg der Wärmeleitfähigkeit mittels eines Wärmeleitfähigkeitsmeßgerätes (Typ Hesto-Lambda-Control-A-50) in Abhängigkeit der Versuchsdauer ermittelt. Je stärker die Wärmeleitfähigkeit ansteigt, desto schlechter ist die Adsorptionswirkung des Gettermaterials gegenüber Gasen, die sich z. B. durch Ausgasen des Kernmaterials oder Permeation durch das Folienmaterial im Inneren der Vakkumisolationseinheit bilden.

Die Kernmaterialien und das Sorptionsmaterial (Getter) der Vakuumisolationseinheiten sowie die Wärmeleitfähigkeiten über mehrere Tage sind den Tabellen 1 und 2 zu entnehmen.

Die Vergleichsbeispiele V1 bis V4 zeigen innerhalb weniger Tage einen deutliche Anstieg der Wärmeleitfähigkeit, während die erfindungsgemäßen Beispiele über die gesamte Versuchsdauer von bis zu einem Jahr konstant auf einem niedrigeren Wert bleiben.

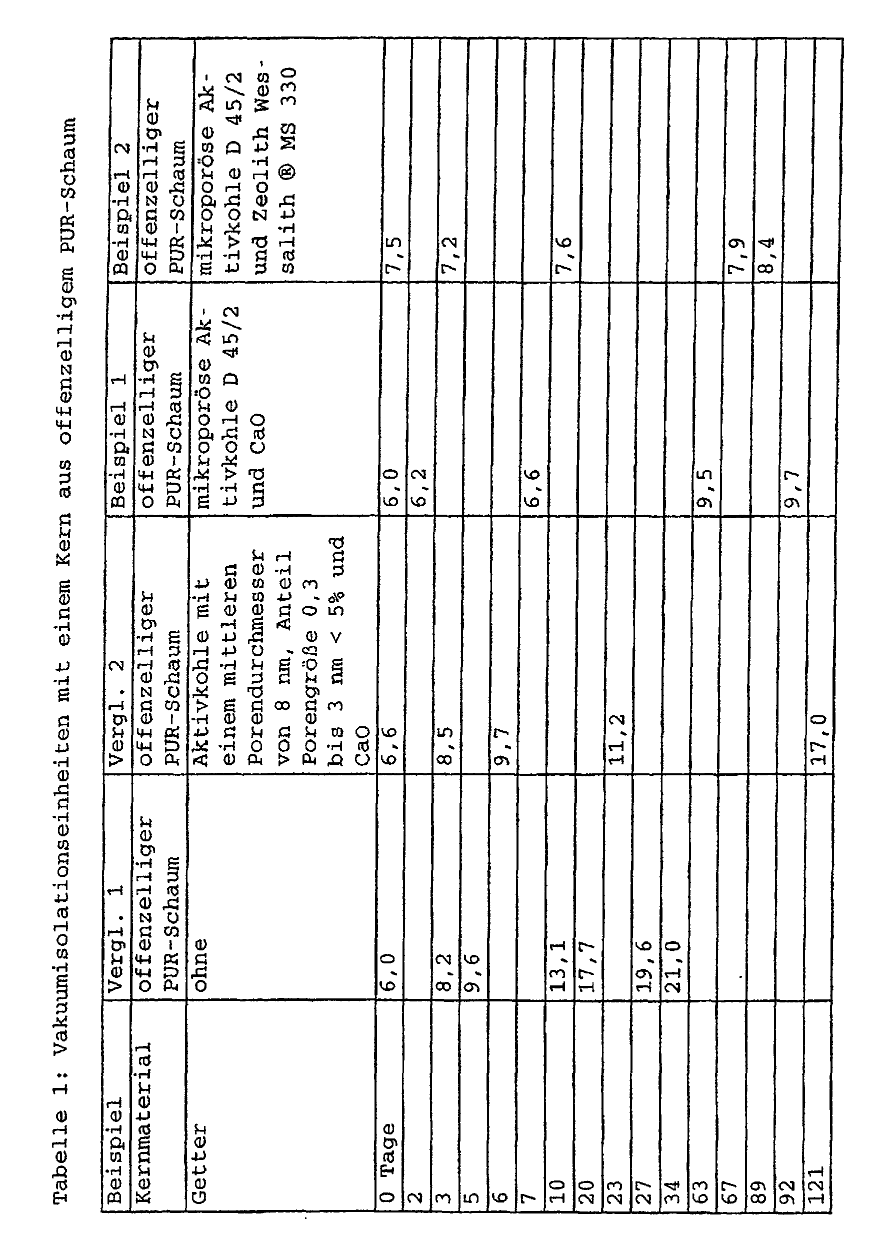

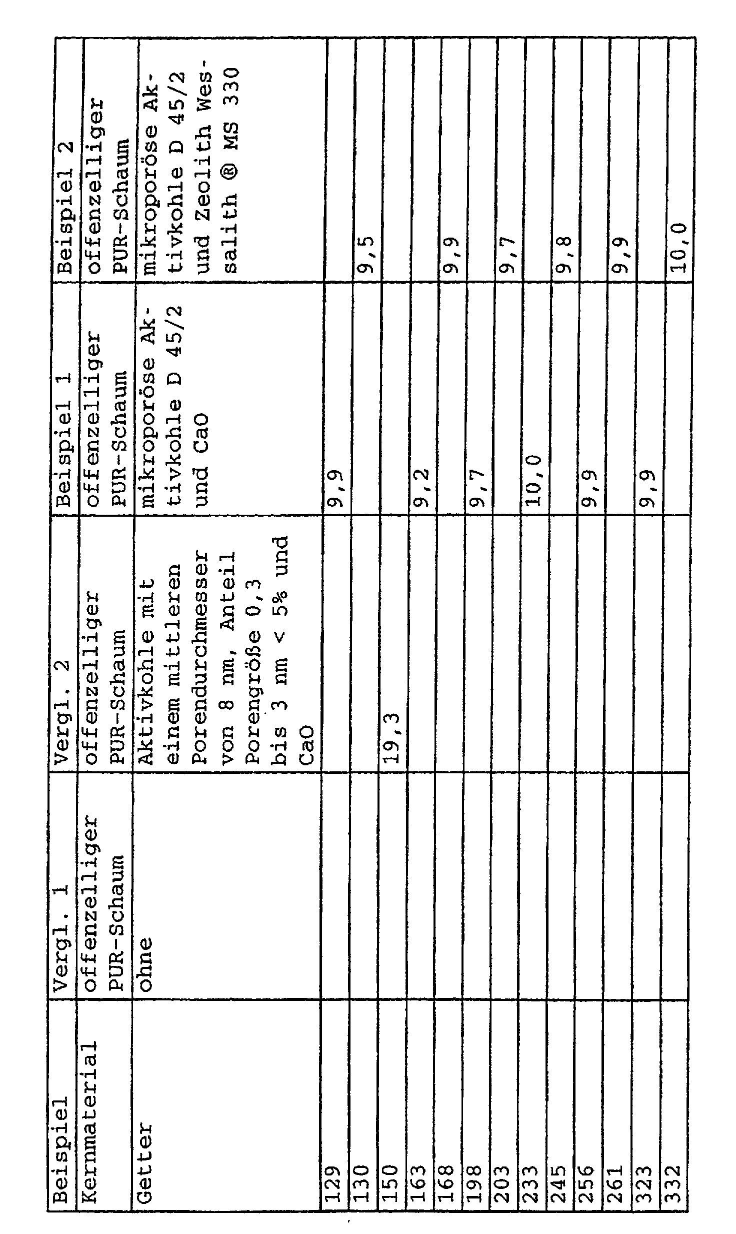

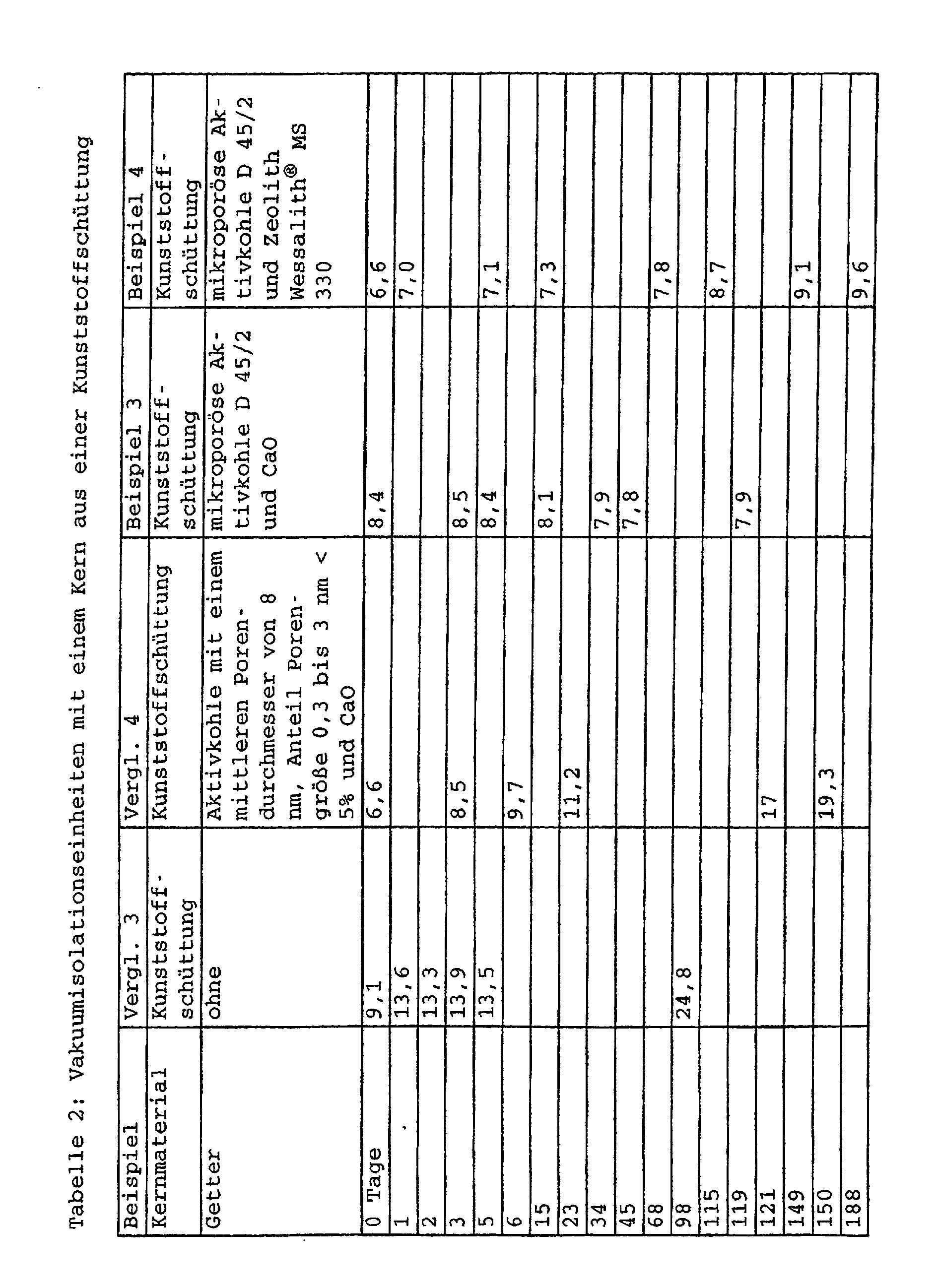

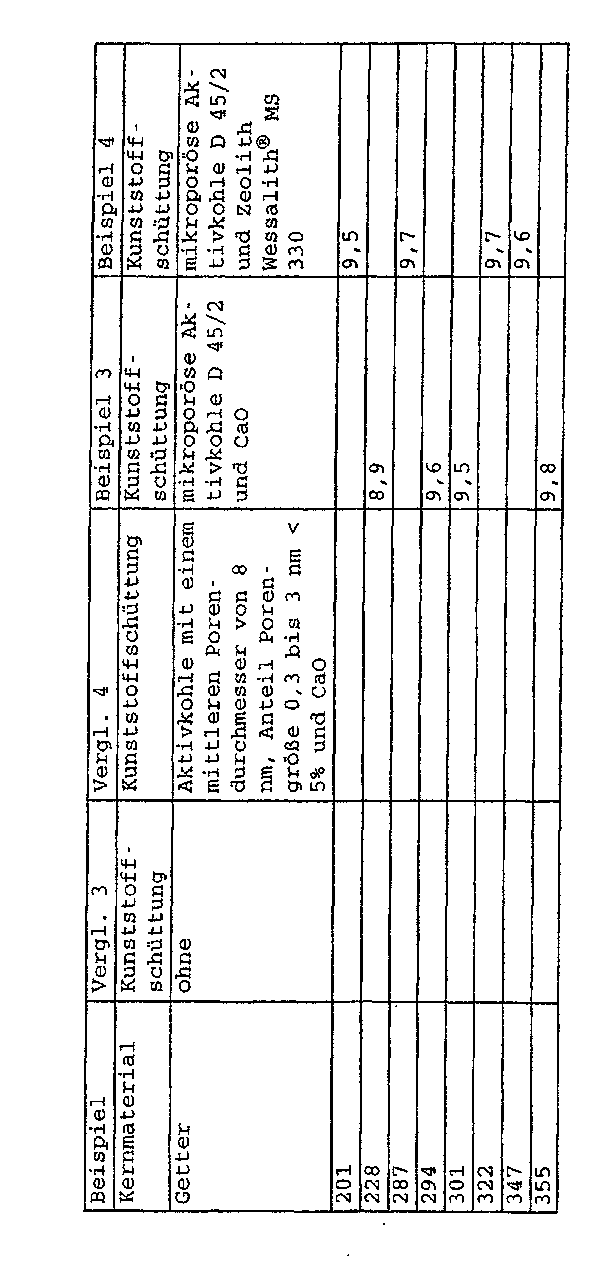

## Patentansprüche

1. Vakuumisolationseinheit, enthaltend als Sorptionsmittel
a) mikroporöse Aktivkohle mit einer Isotherme vom Typ I und einem mittleren Porendurchmesser im Bereich von 0,4 bis 4,1 nm und
b) mindestens eine Wasserdampf absorbierende Substanz.

2. Vakuumisolationseinheit nach Anspruch 1, **dadurch gekennzeichnet, daß** die mikroporöse Aktivkohle ein Porenvolumen im Bereich von 0,20 bis 1,4 cm³/g besitzt.

3. Vakuumisolationseinheit nach den Ansprüchen 1 oder 2, **dadurch gekennzeichnet, daß** die mikroporöse Aktivkohle eine Korngröße im Bereich von 0,5 bis 40 mm besitzt.

4. Vakuumisolationseinheit nach den Ansprüchen 1 bis 3, **dadurch gekennzeichnet, daß** die mikroporöse Aktivkohle einen Wassergehalt im Bereich von 0,1 bis 20 Gew.-% besitzt.

5. Vakuumisolationseinheit nach den Ansprüchen 1 bis 4, **dadurch gekennzeichnet, daß** das Sorptionsmittel mindestens 5 Gew.-% mikroporöse Aktivkohle enthält.

6. Vakuumisolationseinheit nach den Ansprüchen 1 bis 5, **dadurch gekennzeichnet, daß** als Wasserdampf absorbierende Substanz mikroporöse Molekularsiebe, Zeolithe, Calciumoxid, Bariumoxid oder eine Mischung davon verwendet wird.

7. Vakuumisolationseinheit nach den Ansprüchen 1 bis 6, **dadurch gekennzeichnet, daß** das Sorptionsmittel im Konzentrationsbereich von 0,01 bis 50 g pro Liter des Volumens der gesamten Vakuumisolationseinheit eingesetzt wird.

8. Vakuumisolationseinheit nach den Ansprüchen 1 bis 7, **dadurch gekennzeichnet, daß** sie einen Kern aus einem offenzelligen Schaumstoff, pulverförmige Kunststoffschüttungen oder Kunststoffasern enthält.

9. Vakuumisolationseinheit nach den Ansprüchen 1 bis 8, **dadurch gekennzeichnet, daß** sie einen offenzelligen Polyurethanhartschaumkern enthält.

## Claims

1. A vacuum insulation unit comprising, as a sorbent,
a) microporous activated carbon having a type I isotherm and an average pore diameter in the range from 0.4 to 4.1 nm and
b) at least one water vapor absorber.

2. A vacuum insulation unit as claimed in claim 1, wherein the microporous activated carbon has a pore volume in the range from 0.20 to 1.4 cm³/g.

3. A vacuum insulation unit as claimed in claim 1 or 2, wherein the microporous activated carbon has a particle size in the range from 0.5 to 40 mm.

4. A vacuum insulation unit as claimed in any of claims 1 to 3, wherein the microporous activated carbon has a water content in the range from 0.1 to 20% by weight.

5. A vacuum insulation unit as claimed in any of claims 1 to 4, wherein the sorbent comprises at least 5% by weight of microporous activated carbon.

6. A vacuum insulation unit as claimed in any of claims 1 to 5, wherein the water vapor absorber used is a microporous molecular sieve, zeolite, calcium oxide, barium oxide or a mixture thereof.

7. A vacuum insulation unit as claimed in any of claims 1 to 6, wherein the sorbent is used in a concentration in the range from 0.01 to 50 g per liter of the volume of the whole vacuum insulation unit.

8. A vacuum insulation unit as claimed in any of claims 1 to 7 comprising a core open-celled foam, loose pulverulent plastic or plastic fibers.

9. A vacuum insulation unit as claimed in any of claims 1 to 8 comprising an open-celled rigid polyurethane foam core.

## Revendications

1. Unité d'isolation sous vide contenant comme agent d'absorption
a) du charbon actif microporeux présentant une isotherme de type I et un diamètre moyen de pores dans la plage de 0,4 à 4,1 nm et
b) au moins une substance absorbant la vapeur d'eau.

2. Unité d'isolation sous vide selon la revendication 1, **caractérisée en ce que** le charbon actif microporeux présente un volume de pores dans la plage de 0,20 à 1,4 cm³/g.

3. Unité d'isolation sous vide selon les revendications 1 ou 2, **caractérisée en ce que** le charbon actif microporeux présente une grosseur de granule dans la plage de 0,5 à 40 mm.

4. Unité d'isolation sous vide selon les revendications 1 à 3, **caractérisée en ce que** le charbon actif microporeux présente une teneur en eau dans la plage de 0,1 à 20% en poids.

5. Unité d'isolation sous vide selon les revendications 1 à 4; **caractérisée en ce que** l'agent d'absorption contient au moins 5% en poids de charbon actif microporeux.

6. Unité d'isolation sous vide selon les revendications 1 à 5, **caractérisée en ce qu'**on utilise comme substance absorbant la vapeur d'eau des tamis moléculaires microporeux, des zéolithes, de l'oxyde de calcium, de l'oxyde de baryum ou un mélange de ceux-ci.

7. Unité d'isolation sous vide selon les revendications 1 à 6, **caractérisée en ce qu'**on utilise l'agent d'absorption dans la plage de concentration de 0,01 à 50 g par litre de volume de la totalité de l'unité d'isolation sous vide.

8. Unité d'isolation sous vide selon les revendications 1 à 7, **caractérisée en ce qu'**elle contient un noyau en mousse à cellules ouvertes, des substances synthétiques sous forme de poudre en vrac ou des fibres synthétiques.

9. Unité d'isolation sous vide selon les revendications 1 à 8, **caractérisée en ce qu'**elle contient un noyau en mousse rigide de polyuréthane à cellules ouvertes.
